# EUROPÄISCHE PATENTANMELDUNG

(11) **EP 1 503 263 A2**
(43) Veröffentlichungstag der Anmeldung: **02.02.2005**
(21) Anmeldenummer: 04016881.7
(22) Anmeldetag: 16.07.2004
(51) Int. Cl.: G05D 16/20

(54) **Verfahren zur Regelung des Kopfdrucks in einem mit Flüssigkeit gefüllten Behälter**

(30) Priorität: 31.07.2003 DE 10335520
(71) Anmelder: Endress + Hauser GmbH + Co. KG., 79689 Maulburg (DE)
(72) Erfinder: Breithaupt, Hartmut, 74523 Schwäbisch-Hall (DE)
(74) Vertreter: Andres, Angelika

(57) **Zusammenfassung**

Bei einem Verfahren zur Regelung des Kopfdrucks K in einem mit Flüssigkeit gefüllten Behälter 4 wird zusätzlich zum Druckwert K der Füllstandswert H zur Kopfdruckregelung eingesetzt. Dadurch kann der Kopfdruck K im Behälter 4 wesentlich genauer geregelt werden.

## Beschreibung

Die Erfindung betrifft ein Verfahren zur Regelung des Kopfdrucks in einem mit Flüssigkeit gefüllten Behälter gemäß dem Oberbegriff des Anspruchs 1.

Geschlossene Flüssigkeitsbehälter werden in vielen Bereichen der industriellen Produktion eingesetzt. In einigen Anwendungsbereichen ist es erforderlich, den Kopfdruck, d.h. den über der Flüssigkeit im Behälter herrschenden Druck, im wesentlichen konstant zu halten. Auch wenn sich der Füllstand im Behälter ändert, sollte der Kopfdruck möglichst unverändert bleiben. Hierfür geeignete Regelungen werden bereits vielfach eingesetzt. Dabei wird der Kopfdruck im Behälter mit Hilfe eines Druckaufnehmers erfasst und ein am Behälter vorgesehenes Ventil entsprechend angesteuert. Steigt der Knopfdruck im Behälter über den Sollwert so wird das Ventil geöffnet, um Druck abzubauen. Sinkt der Kopfdruck unter den Sollwert, so wird das Ventil so angesteuert, dass Luft oder Gas in den Behälter nachströmen kann.

Aufgrund der geringen Empfindlichkeit der eingesetzten Druckaufnehmer auf Druckänderungen weisen derartige Regelungen ein sehr breites Hystereseverhalten auf. Dies bedeutet, dass der Kopfdruck im Behälter nur innerhalb eines relativ breiten Druckbereichs konstant gehalten werden kann.

Aufgabe der vorliegenden Erfindung ist es deshalb ein Verfahren zur Regelung des Kopfdrucks in ein mit Flüssigkeit gefüllten Behälter anzugeben, das eine genauere Regelung des Kopfdrucks erlaubt und das einfach und kostengünstig durchführbar ist. Gelöst wird diese Aufgabe durch die in Anspruch 1 angegebenen Merkmale.

Vorteilhafte Weiterentwicklung der Erfindung sind in den Unteransprüchen angegeben.

Die wesentliche Idee der Erfindung besteht darin, zusätzlich zum Druckwert den Füllstandswert zur Kopfdruckregelung zu verwenden. Hierfür ist ein entsprechender Füllstandssensor am Behälter notwendig. Mit Hilfe dieses Füllstandssensors lassen sich indirekt auch relativ kleine Änderungen des Kopfdrucks erfassen und entsprechend regeln.

In einer Weiterentwicklung der Erfindung wird die Änderung des Füllstandswertes in eine Änderung des Kopfdruckwertes umgerechnet.

Bei dem Ventil handelt es sich in vorteilhafter Weise um ein 3/2 - Wege - Ventil, einem stetigen Ventil oder einem oszillierenden Ventil. Diese Ventile zeichnen sich dadurch aus, dass sie eine feine Regelabweichung ausregeln können und auch auf grobe Regelabweichungen reagieren.

Um auch sehr kleine Füllstandsänderungen zuverlässig zu erfassen, ist als Füllstandssensor ein Radarfüllstandsmessgerät vorgesehen.

Für derartige Regelungen ist es vorteilhaft, dass Druckaufnehmer, Ventil und Füllstandssensor zum Datenaustausch miteinander verbunden sind.

In vorteilhafter Weise ist das Regelprogramm, das den Kopfdruck regelt, im Druckaufnehmer implementiert.

Nachfolgend ist die Erfindung anhand eines in der Zeichnung dargestellten Ausführungsbeispiels näher erläutert.

Es zeigt:

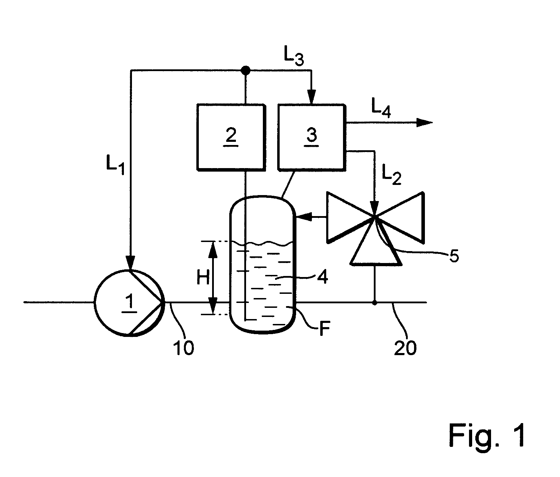

- Fig. 1: schematische Darstellung eines mit Flüssigkeit gefüllten Behälters in einer Produktionsanlage.

In einem Behälter 4 befindet sich eine Flüssigkeit F. Der Füllstand der Flüssigkeit F im Behälter 4 ist mit H gekennzeichnet. Der freie Raum oberhalb der Flüssigkeit F ist mit Gas oder Luft gefüllt. Es herrscht hier ein bestimmter Druck, der Kopfdruck K. Mit Hilfe eines am Behälter 4 vorgesehen Ventils 5, kann der Kopfdruck K verändert werden.

Die Zuführung von Flüssigkeit F in den Behälter erfolgt über die Pumpe 1, die in eine Zuführleitung 10 vorgesehen ist. Über eine Abführleitung 20, kann Flüssigkeit aus dem Behälter 4 entnommen werden.

Zur Bestimmung des Füllstandes ist am Behälter 4 ein Füllstandssensor 2 vorgesehen. Der Kopfdruck K wird mit Hilfe eines Druckaufnehmers 3 erfasst. Die Pumpe 1, der Füllstandssensor 2, der Druckaufnehmer 3 und das Ventil 5 sind zum Datenaustausch über Datenleitungen L1, L2, L3 miteinander verbunden.

Vom Druckaufnehmer 3 führt eine Datenleitung L4 zu einem nicht dargestellten übergeordneten Steuersystem.

Bei dem Füllstandssensor 2 kann es sich z. B. um ein Radarfüllstandsmessgerät handeln. Das Ventil 5 ist als 3/2 - Wege - Ventil ausgebildet.

Nachfolgend ist die Funktionsweise der Erfindung näher erläutert. Steigt der Füllstand H der Flüssigkeit F im Behälter 4, so erhöht sich der Kopfdruck K über der Flüssigkeit F. Die Änderung des Füllstands wird mit Hilfe des Füllstandssensors 2 erfasst und z. B. in eine Druckänderung des Kopfdrucks K umgerechnet. Um den Kopfdruck K möglichst konstant zu halten, muss das Ventil 5 entsprechend angesteuert werden. Über das Ventil 5 wird deshalb Gas bzw. Luft aus dem Behälter 4 abgelassen.

Dadurch dass auch relativ kleine Druckänderungen indirekt über Füllstandsänderungen erfasst werden können, besitzt die Regelung ein sehr kleines Hystereseverhalten. Dies ist vor allem bei empfindlichen Produkten, die keine großen Kopfdruckschwankungen vertragen von großer Wichtigkeit.

In vorteilhafter Weise ist das Regelprogramm zur Steuerung des Kopfdrucks K im Druckaufnehmer 3 vorgesehen. Der Datenaustausch zwischen den einzelnen Komponenten kann analog oder digital erfolgen.

## Patentansprüche

1. Verfahren zur Regelung des Kopfdrucks in einem mit Flüssigkeit gefüllten Behälter mit einem Druckaufnehmer (3) zur Erfassung des Kopfdrucks K im Behälter (4) und einem Ventil (5) zur Beeinflussung des Kopfdrucks K, **dadurch gekennzeichnet, dass** zusätzlich zum Druckwert K der Füllstandswert H zur Kopfdruckregelung ausgewertet wird.

2. Verfahren nach Anspruch 1, **dadurch gekennzeichnet, dass** die Änderung des Füllstandswerts H in eine Änderung des Kopfdruckwerts K umgerechnet wird.

3. Verfahren nach einem der vorhergehenden Ansprüche, **dadurch gekennzeichnet, dass** das Ventil ein 3/2 - Wege - Ventil ist.

4. Verfahren nach einem der vorhergehenden Ansprüche, **dadurch gekennzeichnet, dass** der Füllstand H im Behälter (4) mit einem Radarfüllstandsmessgerät erfasst wird.

5. Verfahren nach einem der vorhergehenden Ansprüche, **dadurch gekennzeichnet, dass** Druckaufnehmer (3), Ventil (5) und Füllstandsmessgerät (2) zum Datenaustausch über Datenleitungen miteinander verbunden sind.
